# EUROPÄISCHE PATENTSCHRIFT

(11) **EP 4 017 785 B1**
(45) Veröffentlichungstag und Bekanntmachung des Hinweises auf die Patenterteilung: **27.03.2024**
(21) Anmeldenummer: 20760810.0
(22) Anmeldetag: 20.08.2020
(51) Int. Cl.: B62D 5/04

(54) **KRAFTFAHRZEUGSERVOLENKUNG**
MOTOR VEHICLE POWER STEERING SYSTEM
SYSTÈME DE DIRECTION ASSISTÉE DE VÉHICULE AUTOMOBILE

(30) Priorität: 22.08.2019 DE 102019212618
(43) Veröffentlichungstag der Anmeldung: 29.06.2022
(73) Patentinhaber: thyssenkrupp Presta AG, 9492 Eschen (LI); thyssenkrupp AG, 45143 Essen (DE)
(72) Erfinder: POLMANS, Kristof, 6464 Tarrenz (AT); SZEPESSY, Imre, 9493 Mauren (LI)
(74) Vertreter: thyssenkrupp Intellectual Property GmbH
(86) Internationale Anmeldenummer: PCT/EP2020/073338
(87) Internationale Veröffentlichungsnummer: WO 2021/032839

(56) Entgegenhaltungen:
- DE-A1-102018 100 515

## Beschreibung

Die Erfindung betrifft eine Kraftfahrzeugservolenkung nach dem Oberbegriff des Anspruchs 1.

Bei Kraftfahrzeugservolenkungen wird über Steuereingriffe des Fahrers an einer Lenkhandhabe, beispielsweise einem Lenkrad, durch die gewählte Handhabestellung ein Vorgabelenkwinkel der gelenkten Räder vorgegeben. Dieser Vorgabelenkwinkel wird mit Hilfe eines Lenkstellers an den gelenkten Rädern eingestellt. Das Stellmoment des Lenkstellers wird üblicherweise von einem Elektromotor bereitgestellt. Beispielsweise kann mit Hilfe des Lenkstellers eine Zahnstange so verschoben werden, dass der gewünschte Fahrzeuglenkwinkel erreicht wird. Im Falle einer klassischen elektromechanischen Kraftfahrzeugservolenkung besteht zwischen der Lenkhandhabe und der Aktuatorik zur Verstellung der gelenkten Räder eine mechanische Kopplung, so dass der Lenksteller nur eine die Steuereingriffe des Fahrers unterstützende Hilfslenkkraft bereitstellt.

Als Weiterentwicklung sind Kraftfahrzeugservolenkungen bekannt, die als Steer-by-Wire Lenksysteme bezeichnet werden und bei denen zwischen Lenkhandhabe und gelenkten Rädern keine mechanische Kopplung mehr besteht. Insbesondere bei Steer-by-Wire Lenksystemen werden hohe Anforderungen an die Ausfallsicherheit der elektronischen Systeme gestellt, da keine mechanische Rückfallebene existiert, mittels derer der Fahrer beim Ausfall des Lenksystems die Lenkfunktion übernehmen könnte.

Aus EP 1 190 936 A1 ist daher eine Steer-by-Wire Servolenkung bekannt, die auch bei Ausfall zumindest einer elektrischen Komponente, insbesondere eines oder aller Winkelsensoren zur Ermittlung der Position der Lenkhandhabe, eine Lenkwinkelvorgabe mittels der Lenkhandhabe ermöglicht. Dabei ist vorgesehen, im Falle eines Fehlers die Ständerwicklung des Elektromotors des Handmomentenstellers auf ein passives Widerstandsnetzwerk zu schalten, die Klemmenspannung und/oder Klemmenströme des Handmomentenstellers zu messen und die elektromotorische Kraft (EMK) des Motors aus diesen Messwerten zu bestimmen. Aus der EMK wiederum lässt sich die Winkelgeschwindigkeit berechnen, deren Integration den Drehwinkel ergibt. Mit Hilfe des Handmomentenstellers lässt sich demzufolge der Lenkhandhabewinkel bzw. -winkelgeschwindigkeit ohne zusätzlichen Sensor bestimmen.

Aus EP 3 254 932 A1 ist es bekannt, den Lenkwinkel der Lenksäule vor und hinter einem Torsionsstab mit einem Winkelsensor abzugreifen, um auf Basis dieser Sensorsignale zwischen einem Lenkzustand und einem Haltezustand des Lenksystems zu unterscheiden.

Wie alle Komponenten des Lenksystems unterliegt auch die mechanische Kraftübertragung zwischen dem Elektromotor des Lenkstellers und den gelenkten Rädern einem Alterungsprozess, der es denkbar und möglich macht, dass in der Kraftübertragung Alterungs- und/oder Ausfallerscheinungen auftreten. Beispielsweise kann ein Zahnriemen, der die Momentübertragung vom elektrischen Antriebsmotor auf einen Verstellaktuator für die gelenkten Räder, wie beispielsweise einen Spindeltrieb, bewirkt, mit der Zeit eine erhöhte Dehnung oder einen anderen Verschleiß aufweisen.

Während bei gewöhnlichen Kraftfahrzeugservolenkungen die Möglichkeit besteht, dass sich diese Alterungserscheinungen dem aufmerksamen Fahrer in einem veränderten Lenkgefühl bemerkbar machen und sich ein bevorstehender Ausfall auf diese Weise ankündigt, besteht in Steer-by-Wire Systemen für den Fahrer überhaupt keine Möglichkeit, Alterungserscheinungen in der Kraftübertragung frühzeitig festzustellen. Nachteilig an den beiden vorstehend beschriebenen Lenksystemen ist daher, dass Veränderungen in der mechanischen Kraftübertragung nicht festgestellt werden können, was ein Risiko für schwere Unfälle aufgrund eines plötzlichen Lenkungsausfalls birgt.

DE 10 2018 100 515 A1 beschreibt ein Verfahren zum Beurteilen des Zustands eines Treibriemens in einer Elektrolenkung mittels Erfassen von durchrutschenden Zähnen. Ein Ritzel ist fest an der Lenksäule angeordnet und greift in einen Zahnbereich der Zahnstange ein. Eine von einem Elektromotor über den Treibriemen angetriebene Schraubenmutter greift in einen Gewindebereich der Zahnstange ein. Einer elektronischen Steuereinheit wird eine Datenbank zur Beurteilung bereitgestellt, die eine Drehbeziehung zwischen der Lenksäule und dem Rotor des Elektromotors speichert.

Es ist die Aufgabe der vorliegenden Erfindung, eine Kraftfahrzeugservolenkung ohne mechanische Verbindung zwischen der Lenkhandhabe und den gelenkten Rädern anzugeben, deren Betriebssicherheit verbessert ist.

Diese Aufgabe wird gelöst durch eine Kraftfahrzeugservolenkung mit den Merkmalen des Anspruchs 1. Vorteilhafte Weiterbildungen ergeben sich aus den Unteransprüchen.

Hierdurch wird Kraftfahrzeugservolenkung geschaffen, die eine Lenkhandhabe mit mindestens einem Handhabesensor zur Erfassung einer Handhabestellung der Lenkhandhabe, einen elektronisch geregelten Lenksteller mit einem Elektromotor zur Bereitstellung eines Stellmoments in Abhängigkeit von der erfassten Handhabestellung, eine mechanische Kraftübertragung zur Übertragung des Stellmoments auf gelenkte Räder und einen Positionssensor zur Erfassung einer Radstellung der gelenkten Räder umfasst. Erfindungsgemäß umfasst die Kraftfahrzeugservolenkung ferner eine Überwachungseinrichtung, die dazu ausgebildet ist, die von dem Positionssensor erfasste Radstellung mit zumindest einer von dem Elektromotor vorgegebenen Eingangsgröße der mechanischen Kraftübertragung in Bezug zu setzen, um die Funktion der mechanischen Kraftübertragung zu überwachen.

Durch die erfindungsgemäße Lösung wird eine Kraftfahrzeugservolenkung geschaffen, die eine elektronische Überwachung der Lenkmechanik enthält. Durch einen Vergleich von Eingangsgrößen der mechanischen Kraftübertragung, wie beispielsweise der Rotorposition oder des Drehmoments des Elektromotors, mit der durch die mechanische Kraftübertragung bewirkten Verstellung der gelenkten Räder kann die Funktion der mechanischen Kraftübertragung in einfacher Weise auf Veränderungen, wie beispielsweise Alterungserscheinungen überwacht werden. Durch eine Erfassung der Radstellung im Zeitverlauf kann die Verstellung der gelenkten Räder auch im Hinblick auf die erreichte Verstellgeschwindigkeit und/oder die Verstellbeschleunigung überwacht werden.

Die Erfassung der Radstellung der gelenkten Räder kann erfindungsgemäß unmittelbar an den Rädern erfolgen. Alternativ kann die Radstellung erfindungsgemäß aber auch indirekt durch Anordnung des Positionssensors an einer Zahnstange der Lenkung erfasst werden. Vorzugsweise sind aber zumindest sämtliche Getriebekomponenten der mechanischen Kraftübertragung zwischen dem Elektromotor und dem Positionssensor angeordnet. Dadurch wird sichergestellt, dass die mechanischen Komponenten, die am wahrscheinlichsten von Alterungserscheinungen betroffen sind, wirksam in ihrer Funktion überwacht werden.

Gemäß einer bevorzugten Ausführungsform kann vorgesehen sein, dass in der Überwachungseinrichtung zumindest ein zulässiger Wertebereich für eine Kombination aus der erfassten Radstellung und/oder aus dieser abgeleiteter Größen mit der mindestens einen Eingangsgröße der mechanischen Kraftübertragung und/oder aus dieser abgeleiteter Größen hinterlegt ist, bei dessen Verlassen ein Hinweissignal an einem Ausgang der Überwachungseinrichtung ausgebbar ist. Durch die Hinterlegung eines zulässigen Wertebereichs in der Überwachungseinrichtung können Veränderungen in der mechanischen Kraftübertragung mittels einer Schwellenwertüberwachung bewertet werden. Es können auch mehrere zulässige Wertebereiche hinterlegt sein, die eine Klassifikation der in der Servolenkung auftretenden Störungen in unterschiedliche Schweregrade ermöglichen. Vorzugsweise kann vorgesehen sein, die Anzahl der aufgetretenen Störungen zu zählen und beispielsweise über das Hinweissignal einem Borddiagnosesystem des Kraftfahrzeugs zur Verfügung zu stellen. Je nach Schwere der Störung kann der Fahrer auch über das Hinweissignal aufgefordert werden, das Fahrzeug sofort an den Straßenrand zu fahren und anzuhalten oder nach einer vorgebbaren Anzahl von Kilometern einer Werkstatt aufzusuchen.

Bevorzugt kann die Überwachungseinrichtung ferner dazu ausgebildet sein, zumindest eine mechanische Eigenschaft der Kraftübertragung quantitativ zu bestimmen und zu überwachen. Derartige mechanische Eigenschaften können beispielsweise die Steifigkeit der Kraftübertragung, das freie Lenkungsspiel und/oder die Reibungsverluste in der Kraftübertragung sein.

Für jede überwachte mechanische Eigenschaft kann ein gesonderter Wertebereich in der Überwachungseinrichtung hinterlegt sein. Dadurch wird es möglich durch die Überwachungseinrichtung detaillierte Diagnoseinformationen zu gewinnen, die eine Bestimmung der Fehlerquelle durch einen Servicemitarbeiter vereinfachen.

Gemäß einer bevorzugten Ausführungsform ist vorgesehen, dass der Elektromotor mit einem Rotorpositionssensor ausgestattet ist, der mit der Überwachungseinrichtung verbunden ist zur Erfassung der Rotorposition des Elektromotors als von dem Elektromotor vorgegebene Eingangsgröße der mechanischen Kraftübertragung. Auf diese Weise wird fortlaufend der Winkel der Rotorwelle des Elektromotors und die Radstellung der gelenkten Räder gemessen und zueinander in Beziehung gesetzt. Da beide Größen mechanisch über Getriebestufen miteinander gekoppelt sind, korrespondieren die entsprechend umgerechneten Winkelwerte im Normalbetrieb unter Berücksichtigung der Elastizitäten der Getriebestufen zueinander. In einer besonders bevorzugten Ausführungsform umfasst die Kraftfahrzeugservolenkung ein vom Rotor des Elektromotors angetriebenes Lenkritzel, das mit einer Zahnstange in Eingriff gebracht ist. Die Umdrehung des Lenkritzels führt somit zu einer Verschiebung der Zahnstange und diese Verschiebung bewirkt ein Verschwenken der Fahrzeugräder - also die Einstellung der Radstellung der gelenkten Räder. Die Überwachungseinrichtung der Kraftfahrzeugservolenkung kann dann dazu ausgebildet sein, die Steifigkeit der mechanischen Kraftübertragung zu überwachen.

Bei der Betrachtung der Rotorposition des Elektromotors ist zu beachten, dass bevorzugt nur die elektrische Position gemessen wird, die ein Vielfaches von 360 Winkelgrad einnimmt, mit dem Faktor der elektrischen Pole, mit der der Elektromotor angesteuert wird. Über eine Umrechnung und Kalibrierung kann daraus die mechanische Winkelposition des Rotors des Elektromotors und damit, soweit vorhanden die mechanische Dreh-Winkelposition des Lenkritzels bestimmt werden.

In einer weiteren Ausführungsform kann die Überwachungseinrichtung mit einer Drehmomenterfassungseinrichtung verbunden sein zur Erfassung eines von dem Elektromotor abgegebenen Drehmoments als von dem Elektromotor vorgegebene Eingangsgröße der mechanischen Kraftübertragung. Die Drehmomenterfassungseinrichtung kann insbesondere als eine Strommesseinrichtung ausgebildet sein, zur Messung eines von dem Elektromotor aufgenommenen Motorstroms. Über den Motorstrom und die von der Motorsteuerung vorgegebenen Drehzahl- und Spannungswerte kann das vom Elektromotor abgegebene Drehmoment berechnet werden.

Bei Vorliegen einer Rotorlageinformation und des von dem Elektromotor abgegebenen Drehmoments kann die Überwachungseinrichtung dazu ausgebildet sein, das freie Lenkungsspiel und/oder Reibungsverluste der mechanischen Kraftübertragung zu überwachen. So kann das freie Lenkungsspiel beispielsweise bestimmt werden als die maximal mögliche Veränderung der Rotorposition bei gleichbleibender Radstellung und ohne Überschreiten eines vorgebbaren Schwellenwertes für das Drehmoment. Reibungsverluste können beispielsweise über die Bestimmung der bei einem bestimmten Drehmoment erreichten Verstellbeschleunigung der gelenkten Räder ermittelt werden.

Die Vorzüge der erfindungsgemäßen Kraftfahrzeugservolenkung treten durch die Ausbildung der Kraftfahrzeugservolenkung als ein Steer-by-Wire Lenksystem zu Tage. Bei Steer-by-Wire Lenksystemen hat ein Ausfall der mechanischen Kraftübertragung nicht nur einen Ausfall der Servounterstützung zur Folge, sondern es kann zu einem vollständigen Verlust der Lenkfähigkeit des Fahrzeugs kommen.

Weitere Ausgestaltungen der Erfindung sind der nachfolgenden Beschreibung und den Unteransprüchen zu entnehmen.

Die Erfindung wird nachstehend anhand der in den beigefügten Abbildungen dargestellten Ausführungsbeispiele näher erläutert.
- Fig. 1: zeigt schematisch ein Ausführungsbeispiel der erfindungsgemäßen Kraftfahrzeugservolenkung in einer perspektivischen Ansicht,
- Fig. 2: zeigt schematisch ein Kraftfahrzeug mit der Kraftfahrzeugservolenkung gemäß Fig. 1,
- Fig. 3: zeigt schematisch Kraftfahrzeugservolenkung gemäß dem Ausführungsbeispiel nach Fig. 1 in einer Frontalansicht,
- Fig. 4: zeigt schematisch das Hystereseverhalten einer Kraftfahrzeugservolenkung anhand von beispielhaften Messkurven der Rotorposition und der Zahnstangenposition im Zeitverlauf,
- Fig. 5: zeigt beispielhaft zwei zulässige Wertebereiche für die Zahnstangenposition bei einer gegebenen Rotorposition im Zeitverlauf,
- Fig. 6 bis 8: zeigen schematisch den Aufbau weiterer Ausführungsbeispiele der erfindungsgemäßen Kraftfahrzeugservolenkung, die sich in der Verarbeitung der Sensordaten unterscheiden.

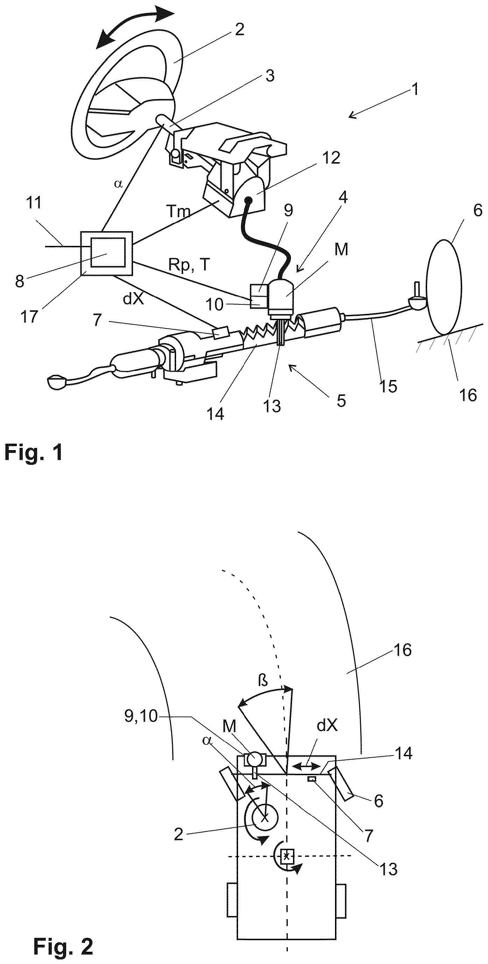

Fig. 1 zeigt ein erstes Ausführungsbeispiel der erfindungsgemäßen Kraftfahrzeugservolenkung 1 in einer perspektivischen Darstellung. Die Kraftfahrzeugservolenkung 1 ist als ein Steer-by-Wire Lenksystem ausgebildet, und es besteht somit keine mechanische Verbindung zwischen der als Lenkrad ausgebildeten Lenkhandhabe 2 und den gelenkten Rädern 6.

Die Kraftfahrzeugservolenkung 1 umfasst ein Lenkrad als Lenkhandhabe 2 mit einem Handhabesensor 3 zur Erfassung einer Handhabestellung α der Lenkhandhabe 2. In Abhängigkeit von der erfassten Handhabestellung α stellt ein Elektromotor M eines elektronisch geregelten Lenkstellers 4 ein Stellmoment bereit, das über eine mechanische Kraftübertragung 5 auf gelenkte Räder 6 übertragen wird. Zur Ansteuerung des Elektromotors M in Abhängigkeit von der Handhabestellung α ist ein Motorsteuergerät 17 vorgesehen. Als zusätzliche Eingabegröße für das Motorsteuergerät 17 kann ein vom Fahrer ausgeübtes Lenkmoment Tm dienen, das beispielsweise über einen Drehmomentsensor an der Lenkwelle aufgenommen werden kann. Bei einem Steer-by-Wire Lenksystem kann der Drehmomentsensor beispielsweise in einen Feedback-Aktuator 12 integriert sein, der Rückwirkungen einer Fahrbahn 16 auf die Lenkhandhabe 2 überträgt. Auch der Handhabesensor 3 kann in den Feedback-Aktuator 12 integriert sein. Weiters wird durch eine Feedbacksteuereinheit 22 die Rückwirkung, die als Feedback von der Straße an den nicht dargestellten Fahrer über die Lenkhandhabe 2 übermittelt wird, bestimmt. Gleichzeitig kann in dieser Steuereinheit auch das Lenkmoment Tm bestimmt werden, falls es nicht durch einen separaten Drehmomentsensor gemessen wird.

Die mechanische Kraftübertragung 5 von dem Elektromotor M auf die gelenkten Räder 6 umfasst ein Lenkgetriebe, das das Stellmoment über ein Lenkritzel 13 und eine Zahnstange 14 in eine Translationskraft der Zahnstange 14 wandelt. Die Zahnstange 14 ist über Spurstangen 15 mit den gelenkten Rädern 6 verbunden, die in Kontakt mit einer Fahrbahn 16 stehen. Die Stellung der gelenkten Räder 6 steht somit in mathematisch eindeutigem Zusammenhang zu der Position der Zahnstange 14. Zur Erfassung der Radstellung dX der gelenkten Räder 6 weist die Kraftfahrzeugservolenkung 1 daher einen Positionssensor 7 auf, der an der Zahnstange 14 angeordnet ist.

Ferner ist in der Kraftfahrzeugservolenkung 1 eine Überwachungseinrichtung 8 vorgesehen, die dazu ausgebildet ist, die von dem Positionssensor 7 erfasste Radstellung dX mit zumindest einer von dem Elektromotor M vorgegebenen Eingangsgröße T der mechanischen Kraftübertragung 5 und der gemessenen Rotorposition Rp des Rotors des Elektromotors in Bezug zu setzen, um die Funktion der mechanischen Kraftübertragung 5 zu überwachen. In dem dargestellten Ausführungsbeispiel ist die Überwachungseinrichtung 8 in das Motorsteuergerät 17 integriert. Denkbar ist aber auch die Überwachungseinrichtung separat von dem Motorsteuergerät 17 auszubilden.

Der Elektromotor M ist mit einem Rotorpositionssensor 9 ausgestattet, der mit der Überwachungseinrichtung 8 verbunden ist. Der Rotorpositionssensor 9 dient der Erfassung der elektrischen Rotorposition Rp des Elektromotors M. Über eine Kalibrierung und eine Erfassung der Anzahl der elektrischen Umdrehungen des Rotors kann daraus der mechanische Rotorwinkel β als Absolutwinkel über mehrere mechanische Umdrehungen bestimmt werden. Der mechanische Rotorwinkel β korrespondiert mit dem Winkel der Drehstellung des Lenkritzels 13. Der Rotorpositionssensor 9 kann als separater Sensor an der Rotorwelle des Elektromotors M angeordnet oder in den Elektromotor M integriert sein. Alternativ kann es vorgesehen sein den Rotorpositionssensor 9 direkt als Absolutwinkelsensor auszulegen, der dazu ausgebildet ist, neben der mechanischen Winkellage der Rotorwelle die Anzahl der Umdrehungen der Rotorwelle des Elektromotors M über den vollen Lenkausschlag der gelenkten Räder 6 nachzuverfolgen und damit als Absolutwinkelsensor für den mechanischen Rotorwinkel β fungiert.

Die Überwachungseinrichtung 8 ist ferner mit einer Drehmomenterfassungseinrichtung 10 verbunden zur Erfassung des von dem Elektromotor M abgegebenen Drehmoments T als von dem Elektromotor M vorgegebene Eingangsgröße der mechanischen Kraftübertragung 5. Die Drehmomenterfassungseinrichtung 10 ist als eine Strommesseinrichtung ausgebildet, zur Messung eines von dem Elektromotor M aufgenommenen Motorstroms.

Die Überwachungseinrichtung 8 ist mit einem Ausgang 11 ausgestattet, über den ein Hinweissignal ausgegeben werden kann, wenn die Überwachungseinrichtung 8 eine Fehlfunktion der mechanischen Kraftübertragung 5 feststellt.

In Fig. 2 ist schematisch ein Kraftfahrzeug mit der erfindungsgemäßen Kraftfahrzeugservolenkung gemäß dem Ausführungsbeispiel nach Fig. 1 dargestellt. An der Lenkhandhabe 2 kann ein Lenkwinkel als Handhabestellung α eingestellt werden. Der elektronisch geregelte Lenksteller wird über den Elektromotor M in Abhängigkeit der Handhabestellung α derart angesteuert, dass die Zahnstange 14 um eine Strecke dX verschoben wird, die mit einer mit der Handhabestellung α verknüpften Radstellung der gelenkten Räder 6 entspricht. Auf diese Weise kann das Fahrzeug entlang der Fahrbahn 16 gelenkt werden. Zur Überprüfung der Funktion der mechanischen Kraftübertragung zwischen Elektromotor M und gelenkten Rädern 6 ist ein Positionssensor 7 vorgesehen, der die Verschiebung dX der Zahnstange 14 misst. Ferner sind ein Rotorpositionssensor 9 und eine Drehmomenterfassungseinrichtung 10 am Elektromotor M vorgesehen. Die Messdaten werden in einer Überwachungseinrichtung (nicht dargestellt) in Bezug zueinander gesetzt. Weiters ist der mechanische Rotorwinkel ß, der mit dem Winkel des Lenkritzels 13 korrespondiert veranschaulicht.

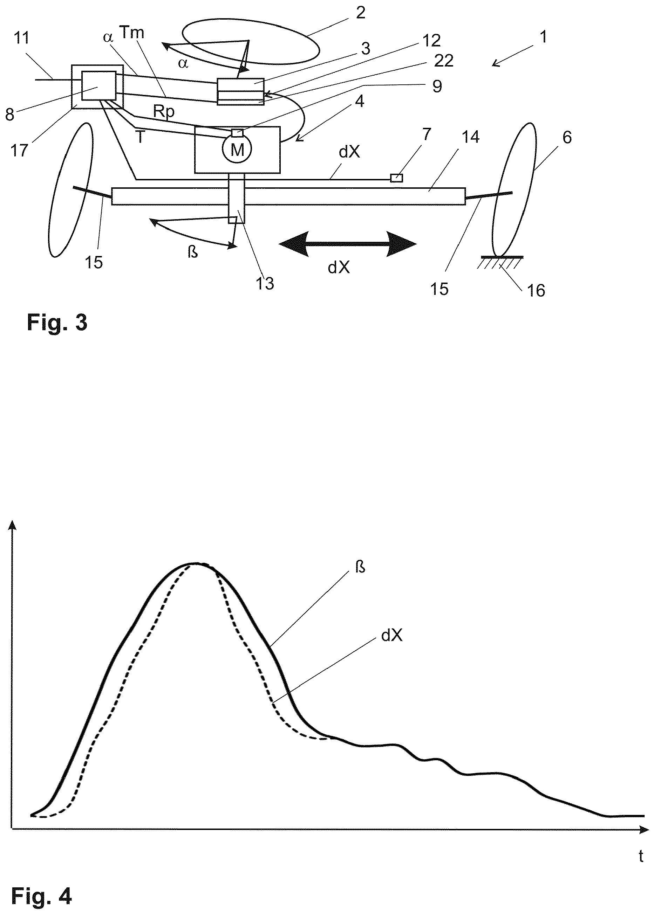

Fig. 3 zeigt die Kraftfahrzeugservolenkung 1 gemäß Fig. 1 in einer Frontalansicht.

In Fig. 4 ist beispielhaft das Hystereseverhalten zwischen der Bewegung der Rotorwelle des Elektromotors M (mechanische Rotorposition ß) und der Bewegung der Zahnstange bzw. der Radstellung der gelenkten Räder dX in einer Kraftfahrzeugservolenkung im Zeitverlauf für den Normalbetrieb dargestellt. Aufgrund der begrenzten Steifigkeit der mechanischen Kraftübertragung 5 und insbesondere deren freien Spiels, eilt die Radstellung dX der gelenkten Räder 6 der Änderung der Rotorwellenposition ß nach. Mit anderen Worten, der geforderte Winkel für die Verschwenkung der Räder 6, der dem mechanischen Rotorwinkel β entspricht, wird gar nicht erreicht. Abhängig von der Bewegungsrichtung der Lenkbewegung können sich daher die eingestellten Radstellungen dX bei der gleichen mechanischen Rotorwinkel β innerhalb eines Toleranzbereichs unterscheiden.

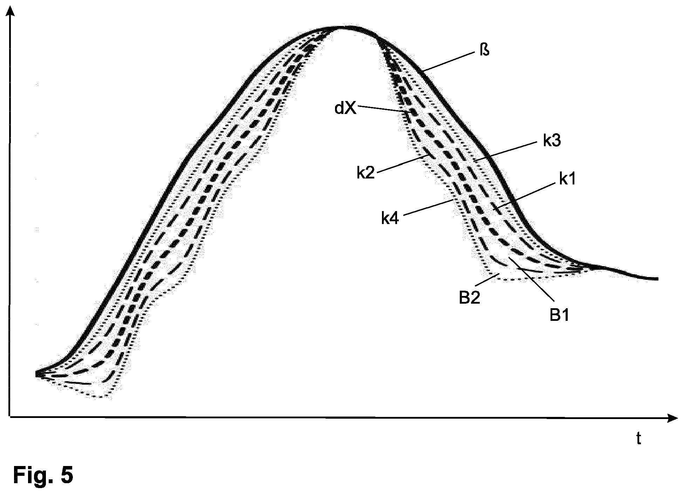

In Fig. 5 ist ein Ausschnitt von Fig. 4 gezeigt, in dem zusätzliche Wertebereiche B1 und B2 eingezeichnet sind. Der Wertebereich B1 ist durch die lang gestrichelt dargestellten Bereichsgrenzen k1 und k2 begrenzt und der Wertebereich B2 ist durch die gepunktet dargestellten Bereichsgrenzen k3 und k4 begrenzt. Der Wertebereich B1 stellt einen zulässigen Wertebereich für die Kombination aus erfasster Radstellung dX und dem erfassten mechanischen Rotorwinkel β dar, der dem Normalbetrieb entspricht. Es ist dabei auch denkbar und möglich zur Bestimmung des Wertebereichs für den Normalbetrieb auch die Geschwindigkeit/Bewegungsrichtung Rv der Rotorwelle als aus der elektrischen Rotorposition Rp oder dem mechanischen Rotorwinkel β abgeleiteter Größe mit heranzuziehen.

Verlässt die gemessene Radstellung dX den Wertebereich B1 wird dies als Funktionsstörung der mechanischen Kraftübertragung 5 erkannt und es kann ein Hinweissignal am Ausgang 11 der Überwachungseinrichtung 8 ausgegeben werden. Das Verlassen des Wertebereichs B1 kann als leichte Funktionsstörung klassifiziert werden, die keine sofortige Stillsetzung des Fahrzeugs erfordert. Der Fahrer kann beispielsweise aufgefordert werden, die Werkstatt innerhalb eines vorgebbaren Zeitraums aufzusuchen. Denkbar ist auch, die Anzahl der leichten Funktionsstörungen zu zählen und in einem Fehlerspeicher abzulegen. Verlässt die gemessene Radstellung dX den Wertebereich B1 wird dies als schwere Funktionsstörung klassifiziert und ein entsprechendes Hinweissignal am Ausgang 11 ausgegeben. Der Fahrer wird aufgefordert, das Fahrzeug schnellstmöglich abzustellen.

Die Wertebereiche B1 und B2 sind in Fig. 5 mit einer Zeitabhängigkeit dargestellt. Diese Zeitabhängigkeit folgt aus dem Zeitverlauf des mechanischen Rotorwinkels β und der daraus abgeleiteten Geschwindigkeit der Rotorwelle Rv. Die dargestellten Wertebereiche B1, B2 sind aber vorzugsweise in Form von zeitunabhängigen Teilbereichen eines mehrdimensionalen Parameterraumes in der Überwachungseinrichtung 8 hinterlegt. Dem dargestellten Beispiel entsprechend können die Wertebereiche B1, B2 als Teilbereiche des dreidimensionalen Parameterraums (β, Rv, dX) definiert sein. Anhand einer durch die Sensoren ermittelten Parameterkombination (β, Rv, dX) lässt sich dann durch Abfrage feststellen, ob diese Kombination innerhalb des jeweiligen vordefinierten Wertebereichs B1, B2 liegt.

Durch geeignete Kombination verschiedener messbarer Größen an der mechanischen Kraftübertragung lassen sich einzelne mechanische Eigenschaften der Kraftübertragung 5 quantitativ bestimmen und überwachen. Insbesondere kann für die Überwachung jeder einzelnen mechanischen Eigenschaft der Kraftübertragung ein gesonderter Wertebereich in der Überwachungseinrichtung 8 hinterlegt sein. Die Differenz der Radstellungen dX bei gleichem Rotorwinkel β und unterschiedlichen Drehrichtungen der Rotorwelle kann beispielsweise als Maß für die Steifigkeit der mechanischen Kraftübertragung dienen. Das freie Lenkungsspiel kann aus der maximal möglichen Differenz des Rotorwinkels β bei gleicher Radstellung dX ohne Überschreiten eines Schwellenwertes für das durch den Elektromotor aufgebrachte Drehmoment bestimmt werden. Reibungsverluste der mechanischen Kraftübertragung können anhand eines erhöhten Drehmomentbedarfs des Elektromotors M zum Erreichen einer vorgegebenen Verstellgeschwindigkeit erkannt werden.

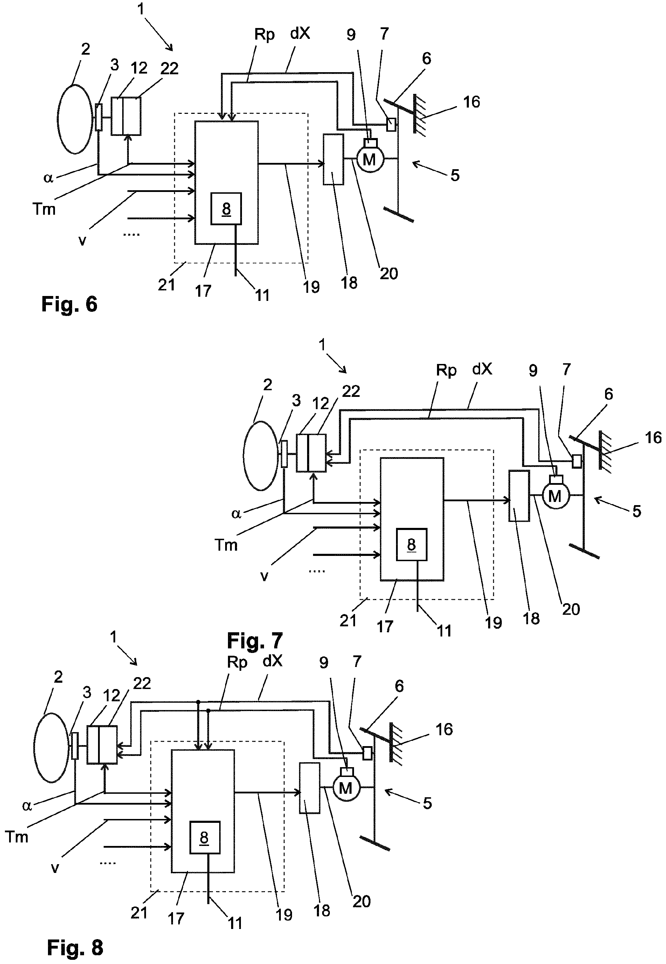

Fig. 6 bis 8 zeigen drei weitere Ausführungsbeispiele der erfindungsgemäßen Kraftfahrzeugservolenkung 1. Die Ausführungsbeispiele unterscheiden sich von dem in Fig. 1 gezeigten ersten Ausführungsbeispiel im Wesentlichen dadurch, dass keine Drehmomenterfassungseinrichtung vorgesehen ist. Das Vorsehen einer Drehmomenterfassungseinrichtung ist aber auch in den Ausführungsbeispielen gemäß Fig. 6 bis 8 denkbar.

Entsprechend den dargestellten Beispielen wird allerdings nur die elektrische Rotorposition Rp real gemessen. In einem Steuergerät wird daraus der erforderliche mechanische Rotorwinkel ß bestimmt. und der Überwachungseinrichtung 8 zugeführt.

Untereinander unterscheiden sich die Ausführungsbeispiele von Fig. 6 bis 8 durch deren strukturellen Aufbau zur Verarbeitung der Sensorsignale von Positionssensor zur Erfassung der Radstellung und Rotorpositionssensor 9 des Elektromotors M.

In dem Ausführungsbeispiel gemäß Fig. 6 werden sämtliche Sensorsignale einer zentralen Lenkungssteuerung 21 unmittelbar zugeführt. Die Lenkungssteuerung 21 umfasst die Motorsteuerung 17, die wiederum die Überwachungseinrichtung 8 enthält. Eine an der Lenkhandhabe 2 eingegebene Handhabestellung α wird von einem Handhabesensor 3 erfasst und der Motorsteuerung 17 zugeführt. Über einen Feedback-Aktuator 12 wird ein Lenkmoment Tm aufgenommen und der Motorsteuerung 17 zugeführt. Weiterhin erhält die Motorsteuerung 17 die Fahrzeuggeschwindigkeit v als Eingabegröße. Es ist denkbar, noch weitere Eingabegrö-ßen für die Motorsteuerung 17 vorzusehen. Außerdem werden die Sensorsignale dX, Rp des Rotorpositionssensors 9 und des an der Zahnstange angeordneten Positionssensors 7 der Motorsteuerung 17 zugeführt. Radstellung dX und Rotorposition Rp werden von dort aus auch an den Feedback-Aktuator 12 weitergegeben zur Aufprägung von Rückwirkungen der Fahrbahn 16 auf die Lenkhandhabe 2.

Die Motorsteuerung 17 generiert ein dem Fahrerlenkwunsch entsprechendes Steuersignal 19, das einer Treiberschaltung 18 des Elektromotors M zugeführt wird, die die Motorströme an Motoranschlüssen 20 schaltet.

Die Überwachungseinrichtung 8 wertet die Radstellung dX und die Rotorposition Rp, oder den bereits in der Lenkungssteuerung 21 aus der Rotorposition bestimmten mechanischen Rotorwinkels β, aus und setzt diese zueinander in Beziehung. Bei Verlassen eines zulässigen Wertebereichs kann ein Hinweissignal am Ausgang 11 der Überwachungseinrichtung 8 ausgegeben werden.

Das Ausführungsbeispiel gemäß Fig. 7 unterscheidet sich von Fig. 6 dadurch, dass eine unmittelbare Rückkopplung der Radstellung dX und der Rotorposition Rp in den Feedback-Aktuator 12, insbesondere in dessen Feedbacksteuereinheit 22, erfolgt, von dem aus dann eine Übermittlung der Messwerte dX, Rp zusammen mit dem an der Lenkhandhabe 2 eingeprägten Lenkmoment Tm an die zentrale Lenkungssteuerung 21 erfolgt.

In Fig. 8 erfolgt abweichend von Fig. 6 und 7 die Rückkopplung der Radstellung dX und der Rotorposition Rp sowohl in den Feedback-Aktuator 12 als auch in die Motorsteuerung 17. Ein Austausch von Radstellung dX und Rotorposition Rp zwischen Feedback-Aktuator 12 und Lenkungssteuerung 21 kann dadurch entfallen.

Im Übrigen gelten die Ausführungen zu dem in Fig. 1 dargestellten Ausführungsbeispiel für die Ausführungsbeispiele gemäß der Fig. 6 bis 8 entsprechend.

### Bezugszeichenliste

- 1: Kraftfahrzeugservolenkung
- 2: Lenkhandhabe
- 3: Handhabesensor
- 4: Lenksteller
- 5: Kraftübertragung
- 6: gelenktes Rad
- 7: Positionssensor
- 8: Überwachungseinrichtung
- 9: Rotorpositionssensor
- 10: Drehmomentbestimmungseinrichtung
- 11: Ausgang
- 12: Feedback-Aktuator
- 13: Lenkritzel
- 14: Zahnstange
- 15: Spurstange
- 16: Fahrbahn
- 17: Motorsteuergerät
- 18: Treiberschaltung
- 19: Steuersignal
- 20: Motoranschlüsse
- 21: Lenkungssteuerung
- 22: Feedbacksteuereinheit

- α: Handhabestellung
- ß: mechanischer Rotorwinkel
- Tm: Lenkmoment
- T: Drehmoment
- v: Fahrzeuggeschwindigkeit
- Rp: Rotorposition
- Rv: Geschwindigkeit der Rotorwelle
- dX: Zahnstangenposition
- B1, B2: Wertebereich
- k1 bis k4: Bereichsgrenzen

## Patentansprüche

1. Kraftfahrzeugservolenkung umfassend eine Lenkhandhabe (2) mit mindestens einem Handhabesensor (3), einen elektronisch geregelten Lenksteller (4) mit einem Elektromotor (M) zur Bereitstellung eines Stellmoments, eine mechanische Kraftübertragung (5) zur Übertragung des Stellmoments auf gelenkte Räder (6) und einen Positionssensor (7) zur Erfassung einer Radstellung (dX) der gelenkten Räder (6), wobei ferner eine Überwachungseinrichtung (8) vorgesehen ist, die dazu ausgebildet ist, die von dem Positionssensor (7) erfasste Radstellung (dX) mit zumindest einer von dem Elektromotor (M) vorgegebenen Eingangsgröße (β, Rp, T) der mechanischen Kraftübertragung (5) in Bezug zu setzen, um die Funktion der mechanischen Kraftübertragung (5) zu überwachen, **dadurch gekennzeichnet, dass** die Kraftfahrzeugservolenkung (1) als ein Steer-by-Wire Lenksystem ausgebildet ist, der Handhabesensor (3) zur Erfassung einer Handhabestellung (α) der Lenkhandhabe (2) und der Elektromotor (M) zur Bereitstellung des Stellmoments in Abhängigkeit von der erfassten Handhabestellung (α) ausgebildet sind, wobei die Erfassung der Radstellung (dX) der gelenkten Räder (6) unmittelbar an den Rädern (6) oder indirekt durch Anordnung des Positionssensors (7) an einer Zahnstange (14) der Lenkung (1) erfolgt.

2. Kraftfahrzeugservolenkung nach Anspruch 1, **dadurch gekennzeichnet, dass** in der Überwachungseinrichtung (8) zumindest ein zulässiger Wertebereich (B1, B2) für eine Kombination aus der erfassten Radstellung (dX) und/oder aus dieser abgeleiteter Größen mit der mindestens einen Eingangsgröße (β, Rp, T) der mechanischen Kraftübertragung (8) und/oder aus dieser abgeleiteter Größen hinterlegt ist, bei dessen Verlassen ein Hinweissignal an einem Ausgang (11) der Überwachungseinrichtung (8) ausgebbar ist.

3. Kraftfahrzeugservolenkung nach Anspruch 1 oder 2, **dadurch gekennzeichnet, dass** die Überwachungseinrichtung (8) dazu ausgebildet ist, zumindest eine mechanische Eigenschaft der Kraftübertragung (5) quantitativ zu bestimmen und zu überwachen.

4. Kraftfahrzeugservolenkung nach Anspruch 2 und 3, **dadurch gekennzeichnet, dass** für jede überwachte mechanische Eigenschaft ein gesonderter Wertebereich (B1, B2) in der Überwachungseinrichtung (8) hinterlegt ist.

5. Kraftfahrzeugservolenkung nach einem der Ansprüche 1 bis 4, **dadurch gekennzeichnet, dass** der Elektromotor (M) mit einem Rotorpositionssensor (9) ausgestattet ist, der mit der Überwachungseinrichtung (8) verbunden ist zur Erfassung der Rotorposition (Rp) des Elektromotors (M) als von dem Elektromotor (M) vorgegebene Eingangsgröße der mechanischen Kraftübertragung (5).

6. Kraftfahrzeugservolenkung nach Anspruch 5, **dadurch gekennzeichnet, dass** die Überwachungseinrichtung (8) dazu ausgebildet ist, die Steifigkeit der mechanischen Kraftübertragung (5) zu überwachen.

7. Kraftfahrzeugservolenkung nach einem der Ansprüche 1 bis 6, **dadurch gekennzeichnet, dass** die Überwachungseinrichtung (8) mit einer Drehmomenterfassungseinrichtung (10) verbunden ist zur Erfassung eines von dem Elektromotor (M) abgegebenen Drehmoments (T) als von dem Elektromotor (M) vorgegebene Eingangsgröße der mechanischen Kraftübertragung (5).

8. Kraftfahrzeugservolenkung nach Anspruch 7, **dadurch gekennzeichnet, dass** die Drehmomenterfassungseinrichtung (10) als eine Strommesseinrichtung ausgebildet ist, zur Messung eines von dem Elektromotor (M) aufgenommenen Motorstroms.

9. Kraftfahrzeugservolenkung nach einem der Ansprüche 5 oder 6 und einem der Ansprüche 7 oder 8, **dadurch gekennzeichnet, dass** die Überwachungseinrichtung (8) dazu ausgebildet ist, das freie Lenkungsspiel und/oder Reibungsverluste der mechanischen Kraftübertragung (5) zu überwachen.

## Claims

1. A motor vehicle power steering system comprising a steering handle (2) having at least one handle sensor (3), an electronically controlled steering actuator (4) having an electric motor (M) for providing an actuating torque, a mechanical power transmission (5) for transmitting the actuating torque to steered wheels (6), and a position sensor (7) for detecting a wheel position (dX) of the steered wheels (6), wherein there is further provided a monitoring device (8) which is configured to relate the wheel position (dX) detected by the position sensor (7) to at least one input parameter (β, Rp, T) of the mechanical power transmission (5) given by the electric motor (M) in order to monitor the functioning of the mechanical power transmission (5), **characterized in that** the motor vehicle power steering system (1) is designed in the form of a steer-by-wire steering system, the handle sensor (3) is configured for detecting a handle position (α) of the steering handle (2) and the electric motor (M) is configured for providing the actuating torque in dependence on the detected handle position (α), wherein the detection of the wheel position (dX) of the steered wheels (6) takes place directly at the wheels (6) or indirectly by arranging the position sensor (7) on a rack (14) of the steering system (1).

2. The motor vehicle power steering system as claimed in claim 1, **characterized in that** at least one permissible value range (B1, B2) for a combination of the detected wheel position (dX), and/or parameters derived therefrom, with the at least one input parameter (β, Rp, T) of the mechanical power transmission (5), and/or parameters derived therefrom, is stored in the monitoring device (8), a warning signal being able to be outputted at an output (11) of the monitoring device (8) in the case of a departure from this permissible value range.

3. The motor vehicle power steering system as claimed in claim 1 or 2, **characterized in that** the monitoring device (8) is configured quantitatively to determine and to monitor at least one mechanical property of the power transmission (5).

4. The motor vehicle power steering system as claimed in claim 2 and 3, **characterized in that** a separate value range (B1, B2) is stored in the monitoring device (8) for each monitored mechanical property.

5. The motor vehicle power steering system as claimed in one of claims 1 to 4, **characterized in that** the electric motor (M) is equipped with a rotor position sensor (9) which is connected to the monitoring device (8) in order to detect the rotor position (Rp) of the electric motor (M) as the input parameter of the mechanical power transmission (5) given by the electric motor (M).

6. The motor vehicle power steering system as claimed in claim 5, **characterized in that** the monitoring device (8) is configured to monitor the stiffness of the mechanical power transmission (5).

7. The motor vehicle power steering system as claimed in one of claims 1 to 6, **characterized in that** the monitoring device (8) is connected to a torque detection device (10) in order to detect a torque (T) delivered by the electric motor (M) as the input parameter of the mechanical power transmission (5) given by the electric motor (M).

8. The motor vehicle power steering system as claimed in claim 7, **characterized in that** the torque detection device (10) is in the form of a current measuring device for measuring a motor current consumed by the electric motor (M).

9. The motor vehicle power steering system as claimed in one of claims 5 or 6 and one of claims 7 or 8, **characterized in that** the monitoring device (8) is configured to monitor the free steering play and/or friction losses of the mechanical power transmission (5).

## Revendications

1. Système de direction assistée pour véhicule automobile comprenant une poignée de direction (2) avec au moins un capteur de poignée (3), un actionneur de direction à commande électronique (4) avec un moteur électrique (M) pour fournir un couple d'actionnement, une transmission de puissance mécanique (5) pour transmettre le couple d'actionnement aux roues directrices (6), et un capteur de position (7) pour détecter une position de roue (dX) des roues directrices (6), et un capteur de position (7) pour détecter une position de roue (dX) des roues directrices (6), dans lequel il est également prévu un dispositif de surveillance (8) qui est configuré pour relier la position de roue (dX) détectée par le capteur de position (7) à au moins un paramètre d'entrée (β, Rp, T) de la transmission de puissance mécanique (5) donnée par le moteur électrique (M) afin de surveiller le fonctionnement de la transmission de puissance mécanique (5), **caractérisé en ce que** le système de direction assistée du véhicule automobile (1) est conçu sous la forme d'un système de direction à commande électrique, le capteur de poignée (3) est configuré pour détecter une position de poignée (α) de la poignée de direction (2) et le moteur électrique (M) est configuré pour fournir le couple d'actionnement en fonction de la position de poignée détectée (α), la détection de la position de roue (dX) des roues directrices (6) s'effectuant directement au niveau des roues (6) ou indirectement en plaçant le capteur de position (7) sur une crémaillère (14) du système de direction (1).

2. Système de direction assistée pour véhicule automobile selon la revendication 1, **caractérisé en ce qu'**au moins une plage de valeurs (B1, B2) admissibles pour une combinaison de la position de roue détectée (dX), et/ou des paramètres qui en découlent, avec au moins un paramètre d'entrée (β, Rp, T) de la transmission de puissance mécanique (5), et/ou des paramètres qui en découlent, est stockée dans le dispositif de surveillance (8), un signal d'avertissement pouvant être émis sur une sortie (11) du dispositif de surveillance (8) dans le cas d'un écart par rapport à cette plage de valeurs admissibles.

3. Système de direction assistée de véhicule automobile selon la revendication 1 ou 2, **caractérisé en ce que** le dispositif de surveillance (8) est configuré quantitativement pour déterminer et surveiller au moins une propriété mécanique de la transmission de puissance (5).

4. Système de direction assistée de véhicule automobile selon les revendications 2 et 3, **caractérisé par le fait qu'**une plage de valeurs (B1, B2) distincte est stockée dans le dispositif de surveillance (8) pour chaque propriété mécanique surveillée.

5. Système de direction assistée du véhicule automobile selon l'une des revendications 1 à 4, **caractérisé par le fait que** le moteur électrique (M) est équipé d'un capteur de position du rotor (9) qui est connecté au dispositif de surveillance (8) afin de détecter la position du rotor (Rp) du moteur électrique (M) en tant que paramètre d'entrée de la transmission de puissance mécanique (5) fournie par le moteur électrique (M).

6. Système de direction assistée de véhicule automobile selon la revendication 5, **caractérisé par le fait que** le dispositif de surveillance (8) est configuré pour surveiller la rigidité de la transmission de puissance mécanique (5).

7. Système de direction assistée pour véhicule automobile selon l'une des revendications 1 à 6, **caractérisé par le fait que** le dispositif de surveillance (8) est connecté à un dispositif de détection de couple (10) afin de détecter un couple (T) fourni par le moteur électrique (M) en tant que paramètre d'entrée de la transmission de puissance mécanique (5) donnée par le moteur électrique (M).

8. Système de direction assistée de véhicule automobile selon la revendication 7, **caractérisé en ce que** le dispositif de détection de couple (10) se présente sous la forme d'un dispositif de mesure de courant pour mesurer un courant moteur consommé par le moteur électrique (M).

9. Système de direction assistée pour véhicule automobile selon l'une des revendications 5 ou 6 et l'une des revendications 7 ou 8, **caractérisé par le fait que** le dispositif de surveillance (8) est configuré pour surveiller le jeu libre de la direction et/ou les pertes par frottement de la transmission de puissance mécanique (5).
